# EUROPÄISCHE PATENTSCHRIFT

(11) **EP 1 114 506 B1**
(45) Veröffentlichungstag und Bekanntmachung des Hinweises auf die Patenterteilung: **15.05.2002**
(21) Anmeldenummer: 99952390.5
(22) Anmeldetag: 13.08.1999
(51) Int. Cl.: H02M 3/335

(54) **SCHALTNETZTEIL**
SWITCHED MODE POWER SUPPLY
ALIMENTATION A DECOUPAGE

(30) Priorität: 20.08.1998 DE 19837919
(43) Veröffentlichungstag der Anmeldung: 11.07.2001
(73) Patentinhaber: Infineon Technologies AG, 81669 München (DE)
(72) Erfinder: PRELLER, Peter, D-81243 München (DE)
(74) Vertreter: Bickel, Michael
(86) Internationale Anmeldenummer: DE9902538
(87) Internationale Veröffentlichungsnummer: WO0011778

(56) Entgegenhaltungen:
- WO-A-89/03136
- WO-A-97/50165
- US-A- 5 619 403
- YOSHINOBU OSHIMA ET AL: "POWER CONTROLLER LSI USING DSP TECHNOLOGY FOR SWITCHING REGULATOR" NEC RESEARCH AND DEVELOPMENT,JP,NIPPON ELECTRIC LTD. TOKYO, Bd. 33, Nr. 2, Seite 178-187 XP000310828 ISSN: 0547-051X

## Beschreibung

Die Erfindung bezieht sich auf ein Schaltnetzteil mit einer Gleichrichteranordnung, die an ihrem Ausgang eine gleichgerichtete Spannung liefert, einem Transformator mit einer Primärwicklung und einer Sekundärwicklung zum Anschluß einer Last, einem Schalttransistor zum getakteten Anlegen der gleichgerichteten Spannung an die Primärwicklung und einer Ansteuereinheit, die den Schalttransistor steuert.

Bei einem Schaltnetzteil wird bekanntlich der durch die Primärwicklung des Schaltnetzteil-Tansformators fließende Strom mittels des Schalttransistors zerhackt. Die auf der Sekundärseite des Transformators induzierten Spannungsimpulse werden gleichgerichtet und geglättet, um eine Last mit der Gleichspannung zu versorgen. Die Ein- und Ausschaltphasen des Schalttransistors werden in Abhängigkeit von der Belastung derart gesteuert, daß eine möglichst lastunabhängige, konstant ausgeregelte Sekundärspannung vorliegt.

Aus der Fig. 3 der internationalen Offenlegungsschrift WO 97/50165 ist ein Schaltnetzteil bekannt, das eine Gleichrichteranordnung aufweist, an deren Ausgang eine gleichgerichtete Spannung zur Verfügung steht, die mittels eines Schalttransistors an eine in Reihe zu dem Schalttransistor geschaltete Primärwicklung eines Übertragers angelegt wird. Eine Ansteuerschaltung des Schalttransistors ist bei dem bekannten Schaltnetzteil an die Sekundärspule gekopppelt und mittels eines Übertragers an einen Steueranschluss des Schalttransistors angeschlossen.

Aus der internationalen Offenlegungsschrift WO 98/03136 ist ein Schaltnetzteil bekannt, bei welchem eine zur Verfügung stehende Gleichspannung mittels eines Schalttransistors an eine in Reihe zu dem Schalttransistor geschaltete Primärwicklung eines Übertragers angelegt wird. Zur Ansteuerung des Schalttransistors ist ein Impulsgenerator vorgesehen, der mittels eines Übertragers an den Steueranschluss des Schalttransistors gekoppelt ist. Der Impulsgenerator ist dabei an eine Sekundärspule des Übertragers angeschlossen. Um ein Anlaufen des Schaltnetzteils zu ermöglichen, ist primärseitig eine Start-Schaltunganordnung vorgesehen, die Energie aus der primärseitig vorhandenen Gleichspannung aufnimmt und die an den Steueranschluss des Schalttransistors angeschlossen ist.

Gelöst wird diese Aufgabe mit einem Schaltnetzteil mit den Merkmalen des Anspruches 1.

Die Erfindung hat den Vorteil, daß zur Ansteuerung des Schalttransistors handelsübliche Mikroprozessoren eingesetzt werden können. Die Auslegung der Ansteuereinheit muß nicht für die Netzspannung, sondern kann für die niedrigere Spannung an der Sekundärwicklung erfolgen.

Die Funktion des Mikroprozessors zur Ansteuerung kann von einem in dem durch das Schaltnetzteil mit Energie zu versorgenden Gerät bereits vorhandenen Prozessor, beispielsweise dem Ablenkprozessor bei Fernsehgeräten, übernommen werden.

Die Ansteuerung des Schalttransistors durch den Mikroprozessor ist sehr flexibel und kann durch Änderung der Software mit relativ geringem Aufwand und auch für kleinere Stückzahlen angepaßt werden. Die Ansteuerung erfolgt bevorzugt digital, sie kann jedoch auch analog erfolgen.

Da der gesamte Steueraufwand auf der Primärseite entfällt, enthält diese im Wesentlichen nur noch den Leistungstransistor, den Brückengleichrichter, das Netzfilter, sowie eventuell eine Strompumpe zur sinusförmigen Stromaufnahme.

Netzspannungsüberwachung, Kurzschlußabschaltung und weitere Sonderfunktionen, wie beispielsweise Burstbetrieb im Standby, können ebenfalls als Software verwirklicht werden.

Die Erfindung wird nachfolgend anhand eines in den Figuren der Zeichnung dargestellten Ausführungsbeispiels näher erläutert. Es zeigen:
Figur 1 das Prinzipschaltbild eines prozessorgesteuerten Schaltnetzteils und
Figur 2 den Verlauf der Ansteuerspannung VG bei unterschiedlicher Last.

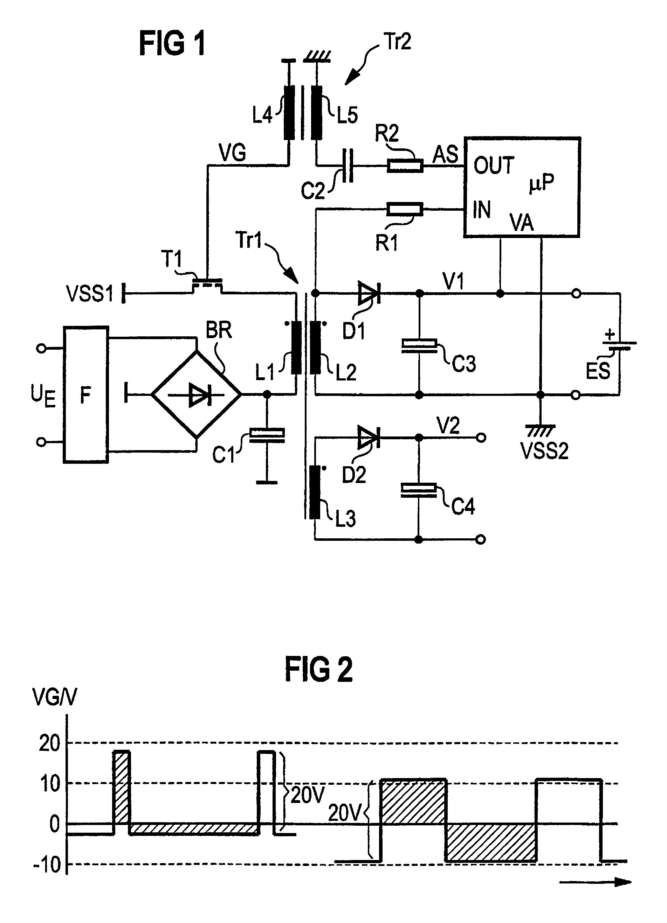

Der Erfindung liegt das Prinzip zu Grunde, ein Schaltnetzteil nicht primärseitig, sondern sekundärseitig über einen Prozessor anzusteuern. Ein Prinzipschaltbild eines prozessorgesteuerten Schaltnetzteils ist in Figur 1 dargestellt. Ein Netzfilter F, dem eine Eingangswechselspannung U_{E} zugeführt werden kann, ist mit dem Eingang einer Gleichrichteranordnung BR verbunden. Die Gleichrichteranordnung BR ist üblicherweise ein Brückengleichrichter. Sein Ausgang ist mit einer Primärwicklung L1 eines Transformators Tr1 verbunden. Zwischen dem Ausgang und einem Primärbezugszugspotential VSSlist eine Primärkapazität C1 geschaltet. Ein weiterer Anschluß der Primärwicklung L1 ist über die Drain-Source-Strecke eines Schalttransistors T1 mit dem Primärbezugszugspotential VSS1 verbunden. Auf der Sekundärseite befinden sich eine erste Sekundärwicklung L2 und eine zweite Sekundärwicklung L3 des Transformators Tr1. Die zweite Sekundärwicklung L3 bildet mit einer Ausgangsdiode D2 und einem Ausgangskondensator C4 eine Serienschaltung. Über dem Ausgangskondensator C4 kann eine Ausgangsspannung V2 abgegriffen werden. Die erste Sekundärwicklung L2 bildet ebenfalls mit einer Versorgungsdiode D1 und einem Versorgungskondensator C3 einen Serienkreis. Über dem Versorgungskondensator C3 fällt eine Versorgungsspannung V1 ab, die einem Prozessor µP zugeführt wird. Im Ausführungsbeispiel ist parallel zur Versorgungskapazität C3 eine wiederaufladbare Batterie ES geschaltet. Die Kapazitäten C3 und C4 dienen jeweils zur Glättung der sekundärseitig in den Wicklungen L2 und L3 induzierten Spannungen.

Der Anodenanschluß der Versorgungsdiode D1 bildet mit einem Anschluß der ersten Sekundärwicklung L2 und einem ersten Widerstand R1 einen gemeinsamen Knotenpunkt. Über diesen Knotenpunkt ist der erste Widerstand R1 mit einem Eingangsanschluß IN des Prozessors µP verbunden. Ein Ausgangsanschluß OUT des Prozessors µP ist über eine Serienschaltung aus einem zweiten Widerstand R2, einer Serienkapazität C2 und einer ersten Wicklung L5 eines Übertragers TR2 mit einem Sekundärbezugspotential VSS2 verbunden. Das Primärbezugspotential VSS1 ist über eine zweite Wicklung L4 des Übertragers Tr2 mit der Steuerelektrode des Schalttransistors T1 verbunden. Über der zweiten Wicklung L4 des Übertragers Tr2 liegt eine Ansteuerspannung VG an.

Das Eingangsfilter F, der Brückengleichrichter BR, die Primärkapazität C1 und der Schalttransistor T1 bilden die Primärseite des Schaltnetzteils. Die Sekundärseite wird von dem Prozessor µP, dem ersten und zweiten Widerstand R1, R2, der Serienkapazität C2 und den zwei Ausgangskreisen mit jeweils einer Sekundärwicklung des Transformators Tr1 gebildet. Zwischen Primär- und Sekundärseite befinden sich der Transformator Tr1 und der Übertrager Tr2.

Die Versorgungsspannung V1 über dem Versorgungskondensator C3 wird dem Prozessor über Versorgungsanschlüsse VA zugeführt. Eine Klemme der Versorgungsanschlüsse VA ist mit dem Sekundärbezugspotential VSS2 verbunden. Der Prozessor wertet die Versorgungsspannung V1 aus und gibt an seinem Ausgang OUT in Abhängigkeit von dieser Spannung V1 ein impulsförmiges Ausgangssignal AS aus. Dieses wird über den zweiten Widerstand R2 und die Serienkapazität C2 an die erste Wicklung L5 des Übertragers Tr2 gegeben. In der zweiten Wicklung L4 des Übertragers Tr2 werden dementsprechend Impulse induziert, die an die Steuerelektrode des Schalttransistors T1 weitergegeben werden. Entsprechend diesen Impulsen wird der Schalttransistor T1 ein- und ausgeschaltet. Auf Grund der Änderungen des magnetischen Flusses wird in den Sekundärwicklungen L2, L3 jeweils eine Spannung induziert. Die in der ersten Sekundärwicklung L2 induzierte Spannung liegt vermindert um den Spannungsabfall an der Versorgungsdiode D1 als Versorgungsspannung V1 an den Versorgungsanschlüssen VA des Prozesses µP an. Er regelt also über die Strecke mit Übertrager Tr2, Schalttransistor T1 und Transformator Tr1 seine Versorgungsspannung V1. Es ist ebenfalls möglich, eine andere Ausgangsspannung als V1 zu regein, wenn diese über einen Spannungsteiler dem Prozessor µP zugeführt wird. Durch die magnetische Kopplung der Sekundärwicklungen L2 und L3 wird auch eine Spannung über einer Last, die zum Kondensator C4 parallelgeschaltet wird, geregelt.

Der Übertrager Tr2 ersetzt den im Rückkopplungszweig bei Schaltnetzteilen sonst üblichen Optokoppler zur galvanischen Trennung von Primär- und Sekundärseite. Zudem sorgt er für eine Transformation der impulsförmigen Ausgangssignale AS des Prozessors µP, die beispielsweise einen Scheitelwert von 3,3 V oder 5 V aufweisen, zu der höheren Spannung der Impulse VG, die beispielsweise 12 V betragen. Durch den Übertrager Tr2 wird erreicht, daß der Schalttransistor T1 mit einer höheren Spannung angesteuert wird, als sie der Prozessor µP liefert.

Damit in der zweiten Wicklung L5 des Übertragers Tr2 der Strom nicht die Sättigungsgrenze überschreiten kann, ist zwischen dem Eingang der Wicklung L5 und dem Ausgang OUT des Prozessors µP die Serienschaltung aus dem zweiten Widerstand R2 und der Serienkapazität C2 geschaltet. Je nach Tastverhältnis der impulsförmigen Ausgangssignale AS stellt sich dann ein entsprechender Gleichspannungspegel des Ansteuersignals VG ein.

In Figur 2 ist der Spannungsverlauf für eine sehr kleine und eine sehr große Ausgangsleistung des Schaltnetzteils gezeigt. Die zusammenhängenden schraffierten Flächen sind Spannungs-Zeit-Produkte. Der Flächeninhalt der linken schraffierten Flächen ist etwa gleich dem Flächeninhalt der rechten schraffierten Flächen. Die Ansteuersignale VG liegen dann im richtigen Spannungsbereich, wenn das Verhältnis zwischen der kleinstmöglichen (linker Impulsverlauf in Figur 2) und der größtmöglichen (rechter Impulsverlauf) Spannung der Ansteuersignale etwa 2 beträgt. Im Ausführungsbeispiel bewegen sich die kleinste und die größte Spannung des Ansteuersignals VG etwa zwischen 10 V und 20 V. Die Tastverhältnisse der Ansteuersignale VG bewegen sich bei Schaltnetzteilen üblicherweise zwischen 0 % und 50 %.

Die Ansteuerleistung, die der Prozessor µP für die Ansteuerung des Schalttransistors T1 über den Übertrager Tr2 aufbringen muß, ist nicht wesentlich höher als die Leistung, die zur direkten Ansteuerung des Schalttransistors T1 ohne Übertrager notwendig ist, da der Übertrager einen hohen Wirkungsgrad besitzt. Die Ansteuerleistung des Schalttransistors, beispielsweise eines Power-MOSFET, ergibt sich aus der periodischen Umladung seiner Gatekapazität. Beträgt beispielsweise die Gatekapazität 1nF und die Spannung des Ansteuersignals 12 V und liegt die Schaltfrequenz des Schalttransistors T1 bei 50 kHz, so liegt die Ansteuerleistung bei 0,5 * 1nF * (12V)² * 50 kHz = 3,6 mW. Diese geringe Ansteuerleistung wird beispielsweise von einer integrierten Treiberstufe des Prozessors µP bereitgestellt. Neue sogenannte "Cool-MOS"-Leistungstransistoren weisen bei gleichem Einschaltwiderstand wie herkömmliche SIPMOS-Transistoren nur etwa 1/5 der Gatekapazität auf.

Auch der Anlauf des Schaltnetzteiles muß von der Sekundärseite aus geschehen, da primärseitig kein Schaltungsaufwand mehr vorhanden ist. Zur sekundärseitigen Bereitstellung der Betriebsspannung für den Prozessor µP gibt es mehrere Möglichkeiten. Die Energie für das erste Anlaufen des Schaltnetzteiles, also wenn auf der Sekundärseite vom Transformator Tr1 noch keine Spannung induziert wird, kann von der wiederaufladbaren Batterie ES, einem entsprechend groß dimensionierten Elektrolytkondensator, der durch regelmäßige Schaltimpulse vor dem Entladen im Standby-Betrieb geschützt wird, oder von einem eventuell bereits vorhandenen Standby-Netzteil zur Verfügung gestellt werden. Da ein Elektrolytkondensator vor dem ersten Einschalten eines Gerätes völlig leer ist und das Netzteil nicht anlaufen könnte, wäre eine mit dem Netzschalter des Gerätes gekoppelte Spule sinnvoll, in der beim Betätigen des Schalters eine genügend große Spannung für den Anlauf induziert wird. Der Vorteil wäre, daß beim Einstecken des Netzsteckers des Gerätes mit bereits gedrücktem Netzschalter das Gerät sich nicht selbst einschalten kann.

Auch eine Netzspannungs-Überwachung kann sekundärseitig erfolgen. Beim Einschalten des Schalttransistors T1 wird in der ersten Sekundärwicklung L2 des Transformators Tr1 eine negative Spannung induziert. Diese ist der Spannung über der Primärkapazität C1 proportional. Es werden Netz-, Unter- oder Überspannungen erfaßt und entsprechende Steuerungsmaßnahmen vom Prozessor µP eingeleitet.

Der Prozessor µP übernimmt auch die Überwachung auf einen Sekundärkurzschluß. Ihm wird über die Versorgungsanschlüsse VA die Vergleichsspannung V1 zugeführt. Am Eingangsanschluß IN erhält der Prozessor µP über den ersten Widerstand R1 die Nulldurchgänge des Transformators Tr1. Diese werden auch im Kurzschlußfall ausgewertet und so wird eine Übersättigung des Trafos Tr1 und eine Zerstörung von Bauteilen verhindert. Der Prozessor µP gibt dann entsprechende Ausgangssignale, um den Schalttransistor T1 auszuschalten.

Das erfindungsgemäße Schaltnetzteil kann gegenüber herkömmlichen Schaltnetzteilen kostengünstiger aufgebaut und zugleich bezüglich seiner Sonderfunktionen flexibler eingesetzt werden. Da die Sonderfunktionen softwaremäßig implementiert sind, können mit einem einzigen Schaltungsaufbau verschiedene Regelspezifikationen erzielt werden.

Bei einem auftretenden Schaden kann das Schaltnetzteil sehr einfach überprüft werden, indem an die Steuerelektrode des Schalttransistors T1 ein Impulsgenerator angeschlossen und die Verbindung zu dem Übertrager Tr2 getrennt wird. Es kann dann festgestellt werden, ob der Fehler im Schaltnetzteil selbst, auf der Sekundärseite oder im Prozessor liegt.

## Patentansprüche

1. Schaltnetzteil mit
- einer Gleichrichteranordnung (BR) die an ihrem Ausgang eine gleichgerichtete Spannung liefert,
- einem Transformator (Tr1) mit einer Primärwicklung (L1), die mit der Gleichrichteranordnung (BR) verbunden ist, und mit einer Sekundärwicklung (L2),
- einem Schalttransistor (T1) zum getakteten Anlegen der gleichgerichteten Spannung an die Primärwicklung (L1),
- einer Ansteuereinheit (µP) zum Ansteuern des Schalttransistors (T1), wobei die Ansteuereinheit (µP) mit der Sekundärwicklung (L2) gekoppelt und von dem Schalttransistor (T1) galvanisch getrennt ist,
**dadurch gekennzeichnet,**
**dass** sekundärseitig eine Schaltungsanordnung (ES) zur Bereitstellung einer Betriebsspannung der Ansteuereinheit (µP) beim Anlaufen des Schaltnetzteils vorgesehen ist.

2. Schaltnetzteil nach Anspruch 1, **dadurch gekennzeichnet,**
**daß** die Ansteuereinheit (µP) über einen Übertrager (Tr2) mit dem Schalttransistor (T1) verbunden ist.

3. Schaltnetzteil nach Anspruch 1 oder 2, **dadurch gekennzeichnet,**
**daß** die Ansteuereinheit (µP) galvanisch mit der Sekundärwicklung (L2) verbunden ist.

4. Schaltnetzteil nach Anspruch 1,
**dadurch gekennzeichnet,**
**dass** die Schaltungsanordnung (ES) zur Bereitstellung der Betriebsspannung der Ansteuereinheit (µP) eine wiederaufladbaren Batterie (ES) oder ein Elektrolytkondensator ist.

## Claims

1. A switched mode power supply having
- a rectifier arrangement (BR) which at its output supplies a rectified voltage ,
- a transformer (Tr1) having a primary winding (L1), which is connected to the rectifier arrangement (BR), and having a secondary winding (L2),
- a switching transistor (T1) for the switched-mode application of the rectified voltage to the primary winding (L1),
- a control unit (µP) for controlling the switching transistor (T1), with the control unit (µP) being coupled to the secondary winding (L2) and being dc insulated from the switching transistor (T1),
**characterised in that** on the secondary side a circuit arrangement (ES) is provided to make available an operating voltage of the control unit (µP) upon the start-up of the switched mode power supply.

2. A switched mode power supply according to Claim 1,
**characterised in that** the control unit (µP) is connected to the switching transistor (T1) via a transformer (Tr2).

3. A switched mode power supply according to Claim 1 or 2,
**characterised in that** the control unit (µP) is dc connected to the secondary winding (L2).

4. A switched mode power supply according to Claim 1,
**characterised in that** the circuit arrangement (CS) for making available the operating voltage of the control unit (µP) is a rechargeable battery (ES) or an electrolytic capacitor.

## Revendications

1. Alimentation à découpage comportant :
- un redresseur (BR) dont la sortie fournit une tension redressée,
- un transformateur (Tr1) avec un primaire (L1) relié au redresseur (BR) et à un secondaire (L2),
- un transistor de commutation (T1) pour appliquer de manière découpée la tension redressée au primaire (L1),
- une unité de commande (µP) pour commander le transistor de commutation (T₁), l'unité de commande (µP) étant couplée au secondaire (L2) et séparée galvaniquement du transistor de commutation (T1),
**caractérisée en ce que**
le secondaire comporte un dispositif de démarrage (ES) fournissant une tension de fonctionnement à l'unité de commande (µP) pour le démarrage de l'alimentation à découpage.

2. Alimentation à découpage selon la revendication 1,
**caractérisée en ce que**
l'unité de commande (µP) est reliée au transistor de commutation (T1) par un transformateur (Tr2).

3. Alimentation à découpage selon la revendication 1 ou 2,
**caractérisée en ce que**
l'unité de commande (µP) est reliée galvaniquement au secondaire (L2).

4. Alimentation à découpage selon la revendication 1,
**caractérisée en ce que**
le dispositif de démarrage (ES) fournissant la tension de fonctionnement à l'unité de commande (µP) est une batterie rechargeable (ES) ou un condensateur électrolytique.
